# EUROPÄISCHE PATENTANMELDUNG

(11) **EP 4 782 675 A1**
(43) Veröffentlichungstag der Anmeldung: **29.07.2026**
(21) Anmeldenummer: 25216846.3
(22) Anmeldetag: 19.11.2025
(51) Int. Cl.: F02D 19/06, A01B 76/00, A01D 41/127

(54) **COMPUTER-IMPLEMENTIERTES VERFAHREN ZUM ERMITTELN EINER KRAFTSTOFFZUSAMMENSETZUNG FÜR EINE LANDWIRTSCHAFTLICHE ARBEITSMASCHINE**

(30) Priorität: 27.01.2025 DE 102025102741
(71) Anmelder: CLAAS E-Systems GmbH, 49201 Dissen (DE)
(72) Erfinder: Steckel, Thilo, 33330 Gütersloh (DE); Wohlfahrt, Fabian, 33428 Harsewinkel (DE); Hohm, Robert, 48231 Warendorf (DE); Venherm, Patrick, 48336 Sassenberg (DE)
(74) Vertreter: CLAAS Gruppe

(57) **Zusammenfassung**

Die vorliegende Erfindung betrifft ein computer-implementiertes Verfahren (300) zum Ermitteln einer Kraftstoffzusammensetzung für eine landwirtschaftliche Arbeitsmaschine (100), wobei die landwirtschaftliche Arbeitsmaschine (100) mit zumindest zwei Kraftstoffen (K1, K2) in der Kraftstoffzusammensetzung (200) befüllbar ist, wobei einer der zumindest zwei Kraftstoffe (K1, K2) insbesondere ein HVO-basierter Kraftstoff ist, das Verfahren umfassend: Bereitstellen (305) einer Feldkarte, wobei mittels der Feldkarte ein berechneter Kraftstoffverbrauch (Vb) der landwirtschaftlichen Arbeitsmaschine (100) basierend auf einem Referenzkraftstoff (KR) bestimmbar ist, wobei die Feldkarte ein Leistungsprofil zum Bestimmen des berechneten Kraftstoffverbrauchs (Vb) der landwirtschaftlichen Arbeitsmaschine (100) aufweist; Bearbeiten (310) einer Feldfläche mittels der landwirtschaftlichen Arbeitsmaschine (100) und erfassen eines tatsächlichen Kraftstoffverbrauchs (Vt) der landwirtschaftlichen Arbeitsmaschine (100) für das Bearbeiten; Bestimmen (315) des berechneten Kraftstoffverbrauchs (Vb) der landwirtschaftlichen Arbeitsmaschine (100) für das Bearbeiten; und Ermitteln (320) der Kraftstoffzusammensetzung (200) basierend auf dem tatsächlichen Kraftstoffverbrauch (Vt) und dem berechneten Kraftstoffverbrauch (Vb).

## Beschreibung

Die vorliegende Erfindung betrifft ein computer-implementiertes Verfahren zum Ermitteln einer Kraftstoffzusammensetzung für eine landwirtschaftliche Arbeitsmaschine. Ferner betrifft die vorliegende Erfindung ein Verfahren zum Betreiben einer landwirtschaftlichen Arbeitsmaschine. Die vorliegende Erfindung betrifft auch eine landwirtschaftliche Arbeitsmaschine mit einem landwirtschaftlichen Dokumentationssystem.

In der modernen Landwirtschaft spielt der Einsatz nachhaltiger Technologien eine zunehmend wichtige Rolle, insbesondere bei der Umstellung von fossilen auf regenerative Kraftstoffe. Dabei bieten regenerative Kraftstoffe, zu denen insbesondere HVO-basierte (d.h. hydrierte Pflanzenöle) und FAME-basierte (d.h. Fettmethylester) Kraftstoffe zählen, eine bedeutende Möglichkeit, den ökologischen Fußabdruck zu verringern und die Abhängigkeit von endlichen Ressourcen zu reduzieren. Um die Nutzung dieser Kraftstoffe effektiv zu fördern und zu überwachen, ist eine präzise Dokumentation ihres Verbrauchs unerlässlich.

Landwirtschaftliche Arbeitsmaschine können mit zumindest zwei Kraftstoffen in einer Kraftstoffzusammensetzung befüllbar sein, d.h. die Kraftstoffzusammensetzung kann sich darauf beziehen, dass eine bestimmte Menge eines ersten Kraftstoffs und eine bestimmte Menge eines zweiten Kraftstoffs vorliegt. Da die landwirtschaftliche Arbeitsmaschine beim Einsatz häufig betankt werden muss und dabei möglicherweise mal der erste Kraftstoff, mal der zweite Kraftstoff getankt wird, besteht typischerweise eine Herausforderung darin, dass unklar ist welche Kraftstoffzusammensetzung vorliegt. Da landwirtschaftliche Arbeitsmaschinen häufig mit einem einzigen (Kraftstoff-) Tank ausgerüstet sind und der erste Kraftstoff und der zweite Kraftstoff in diesem (Kraftstoff-)Tank gemischt sein können, kann es schwierig sein, die Kraftstoffzusammensetzung zu bestimmen bzw. die landwirtschaftliche Arbeitsmaschine basierend auf der Kraftstoffzusammensetzung einzustellen.

Die vorliegende Erfindung hat sich zum Ziel gesetzt, ein Verfahren für eine landwirtschaftliche Arbeitsmaschine zu entwickeln, das einen effektiven Betrieb der landwirtschaftlichen Arbeitsmaschine basierend auf der Kraftstoffzusammensetzung ermöglicht.

Diese Aufgabe wird durch die hier offenbarten Ausführungsformen gelöst, die insbesondere durch den Gegenstand der unabhängigen Ansprüche definiert sind. Die abhängigen Ansprüche betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Ein Aspekt bezieht sich auf ein computer-implementiertes Verfahren zum Ermitteln einer Kraftstoffzusammensetzung für eine landwirtschaftliche Arbeitsmaschine. Dabei kann die landwirtschaftliche Arbeitsmaschine mit zumindest zwei Kraftstoffen in der Kraftstoffzusammensetzung befüllbar sein. Einer der zumindest zwei Kraftstoffe kann insbesondere ein HVO-basierter Kraftstoff sein. Das Verfahren kann in einem Schritt ein Bereitstellen einer Feldkarte umfassen. Dabei kann mittels der Feldkarte ein berechneter Kraftstoffverbrauch der landwirtschaftlichen Arbeitsmaschine basierend auf einem Referenzkraftstoff bestimmbar sein, wobei die Feldkarte ein Leistungsprofil zum Bestimmen des berechneten Kraftstoffverbrauchs der landwirtschaftlichen Arbeitsmaschine aufweist. In einem weiteren Schritt kann das Verfahren ein Bearbeiten einer Feldfläche mittels der landwirtschaftlichen Arbeitsmaschine und erfassen eines tatsächlichen Kraftstoffverbrauchs der landwirtschaftlichen Arbeitsmaschine für das Bearbeiten umfassen. Das Verfahren kann in einem weiteren Schritt ein Bestimmen des berechneten Kraftstoffverbrauchs der landwirtschaftlichen Arbeitsmaschine für das Bearbeiten umfassen. In einem weiteren Schritt kann das Verfahren ein Ermitteln der Kraftstoffzusammensetzung basierend auf dem tatsächlichen Kraftstoffverbrauch und dem berechneten Kraftstoffverbrauch umfassen.

Die landwirtschaftliche Arbeitsmaschine kann speziell für die Ernte von Nutzpflanzen auf einer Feldfläche vorgesehen sein. Bei der landwirtschaftlichen Arbeitsmaschine kann es sich beispielsweise um einen Feldhäcksler, Mähdrescher oder Traktor handeln. Die landwirtschaftliche Arbeitsmaschine kann selbstfahrend und/oder autonom ausgeprägt sein. Es ist möglich, dass die landwirtschaftliche Arbeitsmaschine so konzipiert ist, dass sie mit einem Gemisch bzw. einer Mischung aus mindestens zwei verschiedenen Kraftstoffen betrieben werden kann. Dabei kann die landwirtschaftliche Arbeitsmaschine über spezielle Vorrichtungen verfügen (bspw. einen Verbrennungsmotor), die die gleichzeitige Verwendung von zwei Kraftstoffen ermöglicht. Beispielsweise kann die landwirtschaftliche Arbeitsmaschine mit einem Gemisch aus fossilem Kraftstoff und regenerativem Kraftstoff betankt sein.

Bei der Feldkarte kann es sich um eine Darstellung der Umgebung, insbesondere ein Feldumgebung, handeln. Die Feldkarte kann ein digitales Medium zur Darstellung der Erdoberfläche sein, d.h. es kann sich um eine digitale Feldkarte handeln. Dabei kann die Feldkarte ein eingeebnetes, verkleinertes und/oder generalisiertes, mit Beschreibungen und Zeichen versehenes Abbild der Erdoberfläche umfassen. Die Feldkarte kann computergestützt vorbereitet werden und daraufhin an die landwirtschaftliche Arbeitsmaschine übermittelt werden. Genauso können Optimierungen an der (digitalen) Feldkarte am Computer durch einen Fahrer bzw. Bediener vorgenommen werden. Der Fahrer bzw. Bediener kann die Optimierungen auch während der Fahrt im Fahrerassistenzsystem oder an einem mobilen Endgerät durchführen. Die (digitale) Feldkarte kann digitale Dokumente, Bilder und/oder Videos umfassen. Die Feldkarte kann dabei auf einem computerlesbaren Medium bzw. einem Datenträger gespeichert vorliegen.

Der HVO-basierte Kraftstoff kann ein synthetischer Kraftstoff sein, der durch die Hydrierung von Pflanzenölen oder tierischen Fetten entsteht. Es wäre möglich, dass dieser Kraftstoff als erneuerbare und umweltfreundlichere Alternative zu herkömmlichem Diesel verwendet wird. Zudem könnte HVO-basierter Kraftstoff sich durch seine chemische Reinheit und hohe Cetanzahl auszeichnen, was zu einer verbesserten Verbrennung und zu geringeren Emissionen führen könnte.

Der berechnete Kraftstoffverbrauch könnte sich auf die theoretische bzw. berechnete Menge an Kraftstoff beziehen, die die landwirtschaftliche Arbeitsmaschine unter bestimmten Betriebsbedingungen und Annahmen (bspw. für einen zum Bearbeiten der Feldfläche zurückgelegten Weg bzw. Strecke) verbrauchen würde. Es wäre möglich, dass der berechnete Kraftstoffverbrauch auf Daten und Modellen basiert, die die Effizienz der landwirtschaftlichen Arbeitsmaschine und die spezifischen Anforderungen des Einsatzes berücksichtigen. Dabei kann Berechnung des berechneten Kraftstoffverbrauchs auf einem Referenzkraftstoff basieren, d.h. es kann ermittelt werden, wie viel Referenzkraftstoff für eine bestimmte Strecke verbraucht werden würde.

Bei dem Referenzkraftstoff könnte es sich um einen standardisierten Kraftstoff handeln, der als Basis oder Maßstab für die Berechnung des berechneten Kraftstoffverbrauchs dient. Der Referenzkraftstoff wäre möglicherweise definiert durch spezifische Eigenschaften wie Energiedichte, Heizwert und/oder Verbrennungscharakteristik, um eine konsistente Vergleichsgrundlage zu bieten.

Das Leistungsprofil könnte als eine Darstellung oder Modellierung der Leistungsanforderungen und -verteilung der landwirtschaftlichen Arbeitsmaschine über einen bestimmten Zeitraum, geometrischen Raum oder Einsatzbereich verstanden werden. Es wäre denkbar, dass das Leistungsprofil Informationen über variierende Leistungsbedarfe in einem bestimmten Bereich (bspw. einer Feldumgebung) enthält, die zur Bestimmung des berechneten Kraftstoffverbrauchs herangezogen werden können.

Das Bearbeiten der Feldfläche mittels der landwirtschaftlichen Arbeitsmaschine kann bspw. derart ablaufen, dass die landwirtschaftliche Arbeitsmaschine über die Feldfläche fahre und verschiedene Aufgaben wie Pflügen, Säen oder Ernten ausführe. Dabei wäre es denkbar, dass der tatsächliche Kraftstoffverbrauch der Maschine während des Bearbeitungsprozesses erfasst werde, um eine genaue Analyse der Effizienz und der Kosten durchzuführen. Dies könnte möglicherweise durch den Einsatz von Sensoren und digitalen Überwachungssystemen geschehen, die den Verbrauch in Echtzeit und kontinuierlich messen und dokumentieren würden.

Es ist möglich, dass das Bestimmen des berechneten Kraftstoffverbrauchs der landwirtschaftlichen Arbeitsmaschine für das Bearbeiten des Feldes so abliefe, dass die Feldkarte zurate gezogen werde, die ein detailliertes Leistungsprofil der Feldkarte enthalten kann. Diese Feldkarte könnte möglicherweise dazu genutzt werden, den Verbrauch basierend auf einem Referenzkraftstoff zu kalkulieren. Dabei wäre es denkbar, dass das Leistungsprofil Informationen über die benötigte Leistung und die spezifischen Bedingungen des Feldes bereitstelle, so dass der berechnete Kraftstoffverbrauch für eine Strecke, die die landwirtschaftliche Arbeitsmaschine zurücklegen wird, abgeschätzt werden könnte.

Ferner ist es möglich, dass das Ermitteln der Kraftstoffzusammensetzung basierend auf dem tatsächlichen und dem berechneten Kraftstoffverbrauch so erfolgen könnte, dass zunächst beide Verbrauchswerte ermittelt bzw. bestimmt und miteinander verglichen werden. Es wäre vorstellbar, dass durch diesen Vergleich Rückschlüsse auf die Effizienz der Verbrennung gezogen werden könnten, die es ermöglichen würden, die genaue Kraftstoffzusammensetzung des genutzten bzw. verbrauchten Kraftstoffs zu analysieren. Möglicherweise könnte dies durch den Einsatz spezieller Analysewerkzeuge oder Software geschehen, die die Differenzen zwischen den beiden Verbrauchswerten auswerten und auf spezifische Kraftstoffzusammensetzungen oder Beimischungen des Kraftstoffs hinweisen. Mittels der Kraftstoffzusammensetzung können Rückschlüsse über die Kraftstoffzusammensetzung des gesamten Tankinhalts der landwirtschaftlichen Arbeitsmaschine getroffen werden. Es kann beispielsweise angenommen werden, dass der gesamte Tankinhalt die Kraftstoffzusammensetzung des tatsächlichen Kraftstoffverbrauchs aufweist.

Es ist möglich, dass das computer-implementiertes Verfahren zum Ermitteln einer Kraftstoffzusammensetzung für eine landwirtschaftliche Arbeitsmaschine zahlreiche Vorteile bieten könnte. Zum einen wäre es denkbar, dass die Möglichkeit, die Maschine mit zumindest zwei unterschiedlichen Kraftstoffen, darunter einem HVO-basierten und/oder FAME Kraftstoff, zu befüllen, eine erhöhte Flexibilität und Anpassungsfähigkeit an unterschiedliche Betriebsbedingungen erlauben könnte. Zudem könnte das Bereitstellen einer Feldkarte, die ein Leistungsprofil enthält, dazu beitragen, den berechneten Kraftstoffverbrauch präzise basierend auf einem Referenzkraftstoff zu bestimmen. Dies könnte es ermöglichen, den tatsächlichen Kraftstoffverbrauch effizienter zu erfassen und Unterschiede zwischen berechnetem und tatsächlichem Kraftstoffverbrauch genau zu analysieren. Ein solches Verfahren könnte ferner zur Optimierung der Kraftstoffnutzung und zur Reduzierung von Kosten und Umweltauswirkungen beitragen, indem es eine fundierte Grundlage für die Auswahl der optimalen Kraftstoffzusammensetzung bietet. Ferner könnte dies Bedienern der landwirtschaftlichen Arbeitsmaschine helfen, die landwirtschaftliche Arbeitsmaschine effizienter zu betreiben und nachhaltigere Entscheidungen zu treffen.

In einem weiteren Aspekt kann das Verfahren ein Einstellen der landwirtschaftlichen Arbeitsmaschine basierend auf der ermittelten Kraftstoffzusammensetzung umfassen, um den tatsächlichen, zukünftigen Kraftstoffverbrauch zu optimieren.

Der tatsächliche, zukünftige Kraftstoffverbrauch könnte die Menge an Kraftstoff sein, die die landwirtschaftliche Arbeitsmaschine in einem bestimmten Zeitraum unter realen Betriebsbedingungen tatsächlich verbrauchen würde. Man könnte annehmen, dass der tatsächliche, zukünftige Kraftstoffverbrauch durch eine Vielzahl von Faktoren beeinflusst würde, darunter die Effizienz der Maschine, die Art des verwendeten Kraftstoffs sowie die spezifischen Einsatzbedingungen und -anforderungen. Beispielsweise wäre durch den Einsatz von Datenanalysen und Vorhersagemodellen eine genauere Schätzung des tatsächlichen, zukünftigen Kraftstoffverbrauchs möglich, um gezielte Maßnahmen zur Optimierung der Effizienz zu ergreifen.

In einem weiteren Aspekt kann die Kraftstoffzusammensetzung ermittelt werden, indem eine Volumenbilanz des tatsächlichen Kraftstoffverbrauchs und des berechneten Kraftstoffverbrauchs gebildet wird.

Bei der Volumenbilanz könnte es sich um eine systematische Methode zur Erfassung und Analyse der Volumen(-ströme) in einem geschlossenen System handeln, bei der der Zufluss, der Abfluss und die Speicherung von Volumen innerhalb eines bestimmten Zeitraums berücksichtigt würden. Beispielsweise kann die Volumenbilanz dazu dienen, sicherzustellen, dass alle Volumenänderungen innerhalb des Systems berechnet werden können.

In einem weiteren Aspekt kann die Kraftstoffzusammensetzung ermittelt werden, indem eine Leistungsbilanz basierend auf dem tatsächlichen Kraftstoffverbrauch und dem berechneten Kraftstoffverbrauch gebildet wird.

Bei der Leistungsbilanz könnte es sich um eine Methode handeln, die Energieeintrag, - verbrauch und -austritt in einem System umfasst. Die Leistungsbilanz könnte beispielsweise umfassen, dass alle Energieflüsse innerhalb eines Systems nachvollziehbar sind und der Energieerhaltungssatz erfüllt wird. Es wäre denkbar, dass eine Leistungsbilanz genutzt würde, um die Effizienz von landwirtschaftlichen Arbeitsmaschinen, Prozessen oder Anlagen zu optimieren, indem Energieverluste identifiziert und minimiert werden.

In einem weiteren Aspekt kann das Leistungsprofil historische Betriebsdaten, insbesondere einen historischen Kraftstoffverbrauch, der landwirtschaftlichen Arbeitsmaschine umfassen. Ferner kann das Leistungsprofil einen Leistungspfad für den von der landwirtschaftlichen Arbeitsmaschine zum Bearbeiten der Feldfläche zurückgelegten Weg umfassen.

Das Leistungsprofil kann demnach entweder historische Betriebsdaten oder einen Leistungspfad umfassen. Auch eine Kombination aus historischen Betriebsdaten und einem Leistungspfad wäre denkbar. Historische Betriebsdaten können sich auf gesammelte Informationen über die Leistung und den Kraftstoffverbrauch einer landwirtschaftlichen Arbeitsmaschine in der Vergangenheit beziehen. Historische Betriebsdaten können die dokumentierte Leistung der Maschine umfassen, einschließlich Geschwindigkeit und Last. Der Leistungspfad kann die Leistung auf dem zum Bearbeiten der Feldfläche zurückgelegten Weg und die Arbeitsweise auf dem Feld beschreiben.

In einem weiteren Aspekt kann das Verfahren ein Bestimmen der Anzahl der Kraftstoffe, mit denen die landwirtschaftliche Arbeitsmaschine befüllt ist, umfassen.

Es kann beispielsweise bestimmt werden, dass die landwirtschaftliche Arbeitsmaschine mit zwei oder drei verschiedenen Arten von Kraftstoffen befüllt bzw. betankt ist und das Verfahren die Anzahl und Arten der Kraftstoffe bestimmt. Die verschiedenen (zwei oder drei) Kraftstoffe können in einem Gemisch in einem einzigen (Kraftstoff-)Tank vorhanden sein.

In einem weiteren Aspekt kann das Verfahren ein Bestimmen der Bilanz von emittierten, treibhausaktiven Stoffen basierend auf der Kraftstoffzusammensetzung umfassen. Dabei kann einer der emittierten, treibhausaktiven Stoffe insbesondere CO2 sein. Ferner kann optional eine Sollmenge einer der zumindest zwei Kraftstoffen basierend auf der bestimmten Bilanz ermittelt werden. Dabei kann die Sollmenge zu einer Reduzierung der der emittierten, treibhausaktiven Stoffe führen.

In einem weiteren Aspekt kann das Ermitteln der Kraftstoffzusammensetzung auf die landwirtschaftliche Arbeitsmaschine wirkende äußere Einflüsse berücksichtigen, insbesondere Temperatur, Luftfeuchtigkeit, Höhenlage, Bodenbeschaffenheit, Topografie, Pflanzenart und/oder Ernteguteigenschaften.

In einem weiteren Aspekt kann das Verfahren beim Bearbeiten der Feldfläche mittels der landwirtschaftlichen Arbeitsmaschine ein Ermitteln einer Startzeit und eines Startorts basierend auf der Feldkarte umfassen. Ferner kann das Verfahren beim Bearbeiten ein Erfassen einer Startmenge an Kraftstoff mittels eines Kraftstoffsensors umfassen. Des Weiteren kann das Verfahren beim Bearbeiten ein Ermitteln einer Endzeit und eines Endorts basierend auf der Feldkarte umfassen. Das Verfahren kann ferner ein Erfassen einer Endmenge an Kraftstoff mittels eines Kraftstoffsensors umfassen. Des Weiteren kann das Verfahren ein Ermitteln eines Kraftstoffverbrauchs basierend auf der Startmenge und Endmenge umfassen.

Ein weiterer Aspekt bezieht sich auf ein Verfahren zum Betreiben einer landwirtschaftlichen Arbeitsmaschine, wobei das Verfahren ein Verfahren zum Ermitteln einer Kraftstoffzusammensetzung für die landwirtschaftliche Arbeitsmaschine nach einem der vorhergehenden Aspekte umfasst.

Es wäre denkbar, dass das Betreiben der landwirtschaftlichen Arbeitsmaschine umfasst, dass ein Bediener die Maschine basierend auf der ermittelten Kraftstoffzusammensetzung einstellt, indem er die notwendigen Einstellungen vornimmt und sicherstellt, dass alle mechanischen und elektronischen Systeme ordnungsgemäß funktionieren. Während des Betriebs könnte es erforderlich sein, die landwirtschaftliche Arbeitsmaschine präzise zu steuern bzw. einzustellen, um die Effizienz zu maximieren und den Boden schonend zu bearbeiten. Möglicherweise müsste der Bediener auch unterschiedliche Werkzeuge und Anbaugeräte an der landwirtschaftlichen Arbeitsmaschine berücksichtigen, um verschiedene Aufgaben wie Pflügen, Säen oder Ernten durchzuführen. Darüber hinaus könnte es wichtig sein, den Kraftstoffverbrauch kontinuierlich zu ermitteln und zu überwachen, um einen reibungslosen Betrieb zu gewährleisten.

Ein Vorteil dieses Verfahrens könnte darin bestehen, dass es den effektiven Betrieb der landwirtschaftlichen Arbeitsmaschine durch die gezielte Anpassung der Kraftstoffzusammensetzung ermöglicht. Man könnte annehmen, dass durch die präzise Ermittlung der Kraftstoffzusammensetzung basierend auf den spezifischen Anforderungen und dem tatsächlichen Kraftstoffverbrauch der landwirtschaftlichen Arbeitsmaschine eine bessere Leistungsfähigkeit erreicht werden könnte. Dies könnte nicht nur die Effizienz steigern, sondern auch deren Lebensdauer verlängern, da die landwirtschaftliche Arbeitsmaschine mit der bestmöglichen Kraftstoffzusammensetzung betrieben würde. Darüber hinaus könnte eine solche Anpassung der Kraftstoffzusammensetzung dazu beitragen, den Ausstoß von Emissionen zu reduzieren und somit effizientere und umweltschonendere Betriebsbedingungen zu schaffen.

Ein weiterer Aspekt bezieht sich auf ein System zur Datenverarbeitung für eine landwirtschaftliche Arbeitsmaschine, umfassend einen Prozessor, der so angepasst und/oder konfiguriert ist, dass er das Verfahren nach einem der vorhergehenden Aspekte ausführt.

Ein weiterer Aspekt bezieht sich auf ein landwirtschaftliches Dokumentationssystem mit einem System zur Datenverarbeitung nach einem der vorhergehenden Aspekte.

Das landwirtschaftliche Dokumentationssystem könnte die Effizienz des Betriebs der landwirtschaftlichen Arbeitsmaschine verbessern, indem es Informationen automatisiert zu Dokumentationen zusammenfasst, einen schnellen Zugriff auf benötigte Informationen ermöglicht und so die Bearbeitungszeit verkürzt. Zudem könnte es die Zusammenarbeit fördern, da es mehreren Nutzern erlaubt, gleichzeitig auf aktuelle Dokumentationen zuzugreifen und Änderungen nachzuverfolgen.

Ein weiterer Aspekt bezieht sich auf eine landwirtschaftliche Arbeitsmaschine mit einem landwirtschaftlichen Dokumentationssystem nach einem der vorhergehenden Aspekte.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Für den Fachmann ist ersichtlich, dass die vorgestellten Verfahren in Form von Anweisungen in Software oder auf einem Computerprogrammprodukt implementiert oder gespeichert sein können, wobei gespeicherte Anweisungen es ermöglichen, die Schritte nach dem Verfahren auszuführen, wenn eine entsprechende datenverarbeitende Maschine durch die Software gesteuert wird. Ausführungsformen beziehen sich daher auch auf ein Speichermedium mit darauf gespeicherter Software, die ausgebildet ist, um die vorgestellten Verfahren durchzuführen, wenn die Software auf einer datenverarbeitenden Einrichtung ausgeführt wird.

Weitere Vorteile und Merkmale ergeben sich aus den folgenden Ausführungsformen, die sich zum Teil auf die Figuren beziehen. Die Figuren zeigen die Ausführungsformen nicht immer maßstabsgetreu. Die Abmessungen der verschiedenen Merkmale können insbesondere zur Klarheit der Beschreibung entsprechend vergrößert oder verkleinert sein. Hierzu sind die Figuren zumindest teilweise schematisiert.

Es zeigt:
- Fig. 1: eine schematische Darstellung einer landwirtschaftlichen Arbeitsmaschine mit einem landwirtschaftlichen Dokumentationssystem und einem System zur Datenverarbeitung gemäß einer Ausführungsform;
- Fig. 2: eine schematische Darstellung der Kraftstoffzusammensetzung gemäß einer Ausführungsform; und
- Fig. 3: eine schematische Darstellung eines computer-implementierten Verfahrens zum Ermitteln der Kraftstoffzusammensetzung für die landwirtschaftliche Arbeitsmaschine gemäß einer Ausführungsform.

In der folgenden Beschreibung wird auf die beigefügten Figuren verwiesen, die Teil der Offenbarung sind und bestimmte Aspekte und Ausführungsformen veranschaulichen, unter denen die vorliegende Offenbarung verstanden werden kann. Gleiche Bezugszeichen beziehen sich auf gleiche oder zumindest funktionell oder strukturell ähnliche Merkmale.

Im Allgemeinen gilt eine Offenbarung eines beschriebenen Verfahrens auch für eine entsprechende Vorrichtung zur Durchführung des Verfahrens oder ein entsprechendes System, das ein oder mehrere Vorrichtungen umfasst, und umgekehrt. Wird beispielsweise ein bestimmter Verfahrensschritt beschrieben, so kann eine entsprechende Vorrichtung ein Merkmal zur Durchführung des beschriebenen Verfahrensschrittes enthalten, auch wenn dieses Merkmal in der Abbildung nicht ausdrücklich beschrieben oder dargestellt ist. Wird dagegen beispielsweise ein bestimmtes Gerät auf der Grundlage von Funktionseinheiten beschrieben, kann ein entsprechendes Verfahren einen oder mehrere Schritte zur Durchführung der beschriebenen Funktionalität enthalten, auch wenn diese Schritte in den Abbildungen nicht explizit beschrieben oder dargestellt sind. Ähnlicherweise kann ein System entsprechende Vorrichtungsmerkmal oder Merkmale zur Durchführung eines bestimmten Verfahrensschritts umfassen. Die Merkmale der verschiedenen oben oder unten beschriebenen beispielhaften Aspekte und Ausführungsformen können kombiniert werden, sofern nicht ausdrücklich etwas anderes angegeben ist.

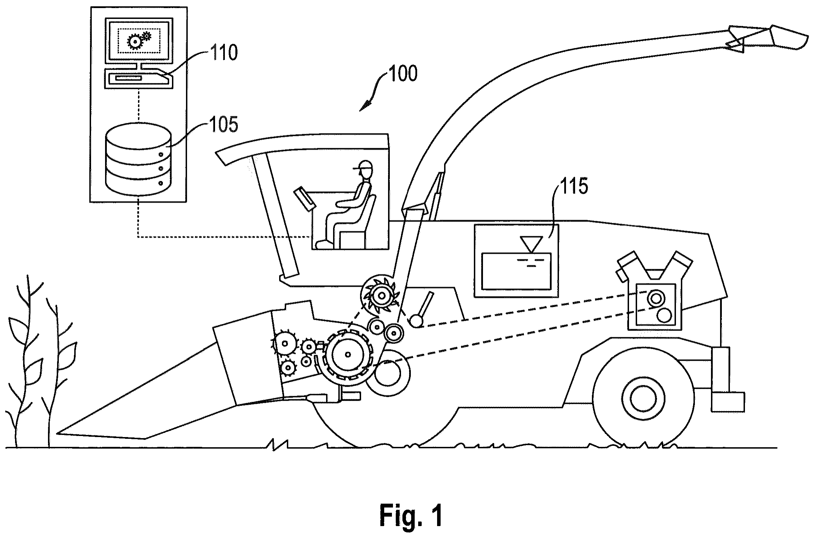

Fig. 1 zeigt eine schematische Darstellung einer landwirtschaftlichen Arbeitsmaschine 100 mit einem landwirtschaftlichen Dokumentationssystem 105 und einem System zur Datenverarbeitung 110 gemäß einer Ausführungsform.

Die landwirtschaftliche Arbeitsmaschine 100 ist vorliegend ein Feldhäcksler, der speziell für die Ernte von Nutzpflanzen auf einer Feldfläche vorgesehen ist. Die landwirtschaftliche Arbeitsmaschine 100 umfasst einen Kraftstofftank 115, der mit zumindest zwei Kraftstoffen K1 und K2 in einer Kraftstoffzusammensetzung befüllbar ist. Dabei ist hier beispielhaft einer der zumindest zwei Kraftstoffe K1, K2 ein HVO-basierter oder FAME Kraftstoff.

Während die landwirtschaftliche Arbeitsmaschine 100 die Feldfläche bearbeitet, wird kontinuierlich Kraftstoff verbraucht. Dabei kann ein tatsächlicher Kraftstoffverbrauch der landwirtschaftlichen Arbeitsmaschine 100 für das Bearbeiten (d.h. für die bearbeitete Strecke) mittels eines Sensorsystems (d.h. Kraftstoffsensoren) erfasst werden. Der tatsächliche Kraftstoffverbrauch ist somit eine Menge an Kraftstoff für eine zurückgelegte Strecke. Für das Bearbeiten, d.h. für diese zurückgelegte Strecke, kann ferner ein berechneter Kraftstoffverbrauch der landwirtschaftlichen Arbeitsmaschine 100 bestimmt werden, d.h. ein Kraftstoffverbrauch, der basierend auf physikalischen Überlegungen bzw. Formeln berechnet wurde.

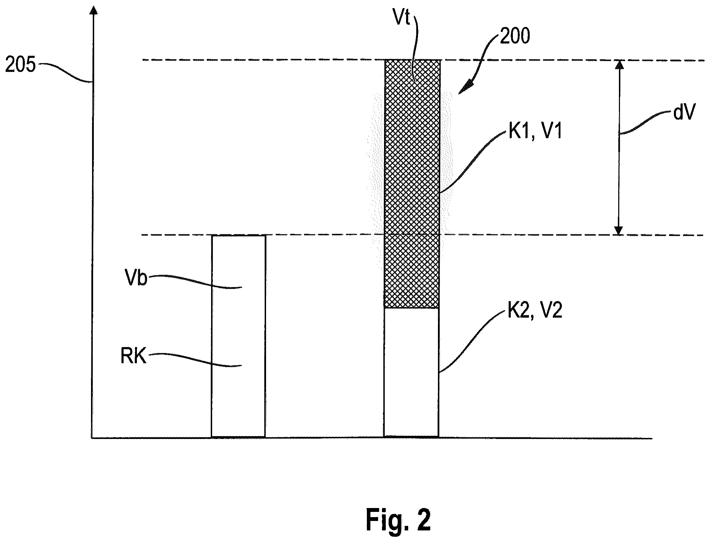

Fig. 2 zeigt eine schematische Darstellung eines Diagramms der Kraftstoffzusammensetzung 200 gemäß einer Ausführungsform.

Das Diagramm zeigt auf einer Achse den Kraftstoffverbrauch 205 in Volumen (bspw. Liter). Es werden zwei Szenarien angezeigt, ein berechneter Kraftstoffverbrauch Vb und ein tatsächlicher Kraftstoffverbrauch Vt. Beide Szenarien beziehen sich auf den Verbrauch einer landwirtschaftlichen Arbeitsmaschine 200 für einen zum Bearbeiten der Feldfläche zurückgelegten Weg, den die landwirtschaftliche Arbeitsmaschine 100 in der Vergangenheit bereits zurückgelegt hat. Das heißt, die landwirtschaftliche Arbeitsmaschine 100 hat beispielsweise einen Weg von 100 km (bspw. bei der Ernte von Nutzpflanzen) zurückgelegt und dabei Kraftstoff verbraucht. Die landwirtschaftliche Arbeitsmaschine 100 nutzt dabei ein Gemisch aus Kraftstoffen, umfassend den ersten Kraftstoff K1 und den zweiten Kraftstoff K2.

Die Berechnung des berechneten Kraftstoffverbrauchs Vb kann auf einem Referenzkraftstoff RK basieren, d.h. es kann ermittelt werden, wie viel Referenzkraftstoff RK die landwirtschaftliche Arbeitsmaschine 100 für den zum Bearbeiten der Feldfläche zurückgelegten Weg verbrauchen würde. Bei dem Referenzkraftstoff RK handelt es sich vorliegend um einen standardisierten Kraftstoff (bspw. Diesel), der Maßstab für die Berechnung des berechneten Kraftstoffverbrauchs Vb dienen kann. Üblicherweise steht für den Referenzkraftstoff RK eine umfangreiche Sammlung historischer Daten zur Verfügung, so dass berechnet bzw. statistisch ermittelt werden kann, wie viel Menge an Referenzkraftstoff RK die landwirtschaftliche Arbeitsmaschine 100 für den zum Bearbeiten der Feldfläche zurückgelegten Weg verbrauchen würde.

Der tatsächliche Kraftstoffverbrauch Vt kann mittels Kraftstoffsensoren während des Betriebs der landwirtschaftlichen Arbeitsmaschine 100 erfasst werden. Die Kraftstoffsensoren können beispielsweise Mengensensoren sein, die die Menge bzw. das Volumen des aus dem Kraftstofftank 115 entnommenen Kraftstoffs (bzw. Gemisch aus Kraftsoffen) erfasst. Ferner kann den zum Bearbeiten der Feldfläche zurückgelegten Weg bzw. eine Strecke der landwirtschaftlichen Arbeitsmaschine 100 auf einer digitalen Feldkarte dokumentiert werden. Beispielsweise kann in einem Schritt eine Startzeit und ein Startort basierend auf der Feldkarte ermittelt werden. In einem weiteren Schritt kann eine Startmenge an Kraftstoff mittels des Kraftstoffsensors erfasst werden. Des Weiteren kann eine Endzeit und ein Endort basierend auf der Feldkarte ermittelt werden. In einem weiteren Schritt kann eine Endmenge an Kraftstoff mittels eines Kraftstoffsensors erfasst werden. Der (tatsächliche) Kraftstoffverbrauch Vt kann basierend auf der Startmenge und Endmenge ermittelt werden.

Der tatsächliche Kraftstoffverbrauch Vt kann in einer Kraftstoffzusammensetzung 200 vorliegen. Dabei kann der tatsächliche Kraftstoffverbrauch Vt in einen ersten Kraftstoffverbrauch V1 des ersten Kraftstoffs K1 und einen zweiten Kraftstoffverbrauch V2 des zweiten Kraftstoffs K2 aufgeteilt werden. Es kann davon ausgegangen werden, dass beide Kraftstoffe K1, K2 im homogenen Gemisch vorliegen und demnach gelichmäßig verbraucht werden. Mittels des tatsächlichen Kraftstoffverbrauchs Vt bzw. der Kraftstoffzusammensetzung 200 können Rückschlüsse über die Kraftstoffzusammensetzung des gesamten Tankinhalts der landwirtschaftlichen Arbeitsmaschine 100 getroffen werden. Es kann beispielsweise angenommen werden, dass der gesamte Tankinhalt die Kraftstoffzusammensetzung 200 des tatsächlichen Kraftstoffverbrauchs Vt aufweist.

Es kann eine Volumendifferenz dV zwischen dem tatsächlichen Kraftstoffverbrauch Vt und dem berechneten Kraftstoffverbrauch Vb gebildet werden. Die Volumendifferenz dV kann zum Ermitteln der Kraftstoffzusammensetzung 200 herangezogen werden.

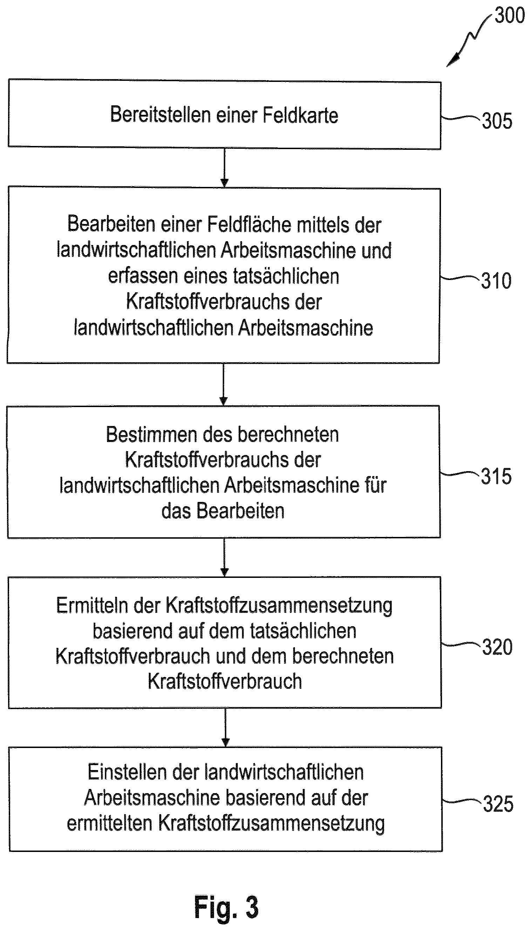

Fig. 3 zeigt eine schematische Darstellung eines computer-implementierten Verfahrens 300 zum Ermitteln der Kraftstoffzusammensetzung 200 für die landwirtschaftliche Arbeitsmaschine 100 gemäß einer Ausführungsform.

In einem Schritt kann das Verfahren 300 ein Bereitstellen 305 einer Feldkarte umfassen. Dabei kann der berechnete Kraftstoffverbrauch Vb der landwirtschaftlichen Arbeitsmaschine 100 mittels der Feldkarte und basierend auf dem Referenzkraftstoff RK bestimmbar sein. Die Feldkarte kann ein Leistungsprofil zum Bestimmen des berechneten Kraftstoffverbrauchs Vb der landwirtschaftlichen Arbeitsmaschine 100 aufweisen. Das Leistungsprofil historische Betriebsdaten umfassen. Historische Betriebsdaten können sich auf gesammelte Informationen über die Leistung und den Kraftstoffverbrauch der landwirtschaftlichen Arbeitsmaschine in der Vergangenheit beziehen.

In einem weiteren Schritt kann das Verfahren 300 ein Bearbeiten 310 einer Feldfläche mittels der landwirtschaftlichen Arbeitsmaschine 100 umfassen. Gleichzeitig kann der tatsächliche Kraftstoffverbrauch Vt der landwirtschaftlichen Arbeitsmaschine 100 für das Bearbeiten, bspw. mittels Kraftstoffsensoren, erfasst werden.

In einem weiteren Schritt kann das Verfahren 300 ein Bestimmen 315 des berechneten Kraftstoffverbrauchs Vb der landwirtschaftlichen Arbeitsmaschine 100 für das Bearbeiten umfassen.

In einem weiteren Schritt kann das Verfahren 300 ein Ermitteln 320 der Kraftstoffzusammensetzung 200 basierend auf dem tatsächlichen Kraftstoffverbrauch Vt und dem berechneten Kraftstoffverbrauch Vb umfassen. Dabei kann zunächst eine Volumenbilanz erstellt werden, wobei die Volumenbilanz die Volumendifferenz dV umfasst. Es kann ferner eine Leistungsbilanz erstellt werden. Beispielsweise kann eine (Leistungs-)Gleichung erstellt werden, die die Leistung des tatsächlichen Kraftstoffverbrauchs Vt und berechneten Kraftstoffverbrauchs Vb umfasst. Die Leistungsgleichung kann den Wirkungsgrad einer Verbrennungsmaschine der landwirtschaftlichen Arbeitsmaschine, die Energiedichten bzw. Heizwerte der Kraftstoffe K1, K2 und RK sowie die spezifischen Kraftstoffverbräuche umfassen. Mittels der Volumenbilanz und der Leistungsbilanz kann ein Gleichungssystem (bspw. linear oder nichtlinear) erstellt werden. Die Lösung des Gleichungssystems kann die Kraftstoffzusammensetzung 200 umfassen, d.h. es können die Kraftstoffzusammensetzung 200 und die Kraftstoffverbräuche V1, V2 mittels des Gleichungssystems basierend auf der Volumenbilanz und der Leistungsbilanz bestimmt werden. Dabei ist es auch möglich, dass die Anzahl der Kraftstoffe K1, K2, mit denen die landwirtschaftliche Arbeitsmaschine 100 befüllt ist, bestimmt wird.

In einem weiteren Schritt kann das Verfahren 300 ein Einstellen 325 der landwirtschaftlichen Arbeitsmaschine 100 basierend auf der ermittelten Kraftstoffzusammensetzung 200 umfassen, um den tatsächlichen, zukünftigen Kraftstoffverbrauch zu optimieren.

In einem weiteren hier nicht dargestellten Schritt kann das Verfahren 300 ein Bestimmen einer Bilanz von emittierten, treibhausaktiven Stoffen basierend auf der Kraftstoffzusammensetzung 200 umfassen. Dabei kann einer der emittierten, treibhausaktiven Stoffe insbesondere CO2 sein. Optional kann eine Sollmenge einer der zumindest zwei Kraftstoffen K1, K2 basierend auf der bestimmten Bilanz ermittelt werden, wobei die Sollmenge zu einer Reduzierung der der emittierten, treibhausaktiven Stoffe führt.

Ein Vorteil dieses Verfahrens ist es, den Verbrauch der Kraftstoffe K1, K2 präzise zu dokumentieren und die Kraftstoffe somit effektiv zu fördern und zu überwachen. Das Verfahren könnte ferner zur Optimierung der Kraftstoffnutzung und zur Reduzierung von Kosten und Umweltauswirkungen beitragen, indem es eine fundierte Grundlage für die Auswahl des (optimalen) tatsächlichen, zukünftigen Kraftstoffverbrauch bietet. Ferner könnte dies Bedienern der landwirtschaftlichen Arbeitsmaschine helfen, die landwirtschaftliche Arbeitsmaschine effizienter zu betreiben und nachhaltigere Entscheidungen zu treffen.

### Bezugszeichenliste

- 100: landwirtschaftliche Arbeitsmaschine
- 105: landwirtschaftliches Dokumentationssystem
- 110: System zur Datenverarbeitung
- 115: Kraftstofftank

- 200: Kraftstoffzusammensetzung
- 205: Kraftstoffverbrauch

- 300: Computer-implementiertes Verfahren
- 305: Bereitstellen einer Feldkarte
- 310: Bearbeiten einer Feldfläche
- 315: Bestimmen des berechneten Kraftstoffverbrauchs
- 320: Ermitteln der Kraftstoffzusammensetzung
- 325: Einstellen der landwirtschaftlichen Arbeitsmaschine

- K1: erster Kraftstoff
- K2: zweiter Kraftstoff
- Vt: tatsächlicher Kraftstoffverbrauch
- V1: erster Kraftstoffverbrauch des ersten Kraftstoffs
- V2: zweiter Kraftstoffverbrauch des zweiten Kraftstoffs
- Vb: berechneter Kraftstoffverbrauch
- RK: Referenzkraftstoff

## Patentansprüche

1. Computer-implementiertes Verfahren (300) zum Ermitteln einer Kraftstoffzusammensetzung für eine landwirtschaftliche Arbeitsmaschine (100), wobei die landwirtschaftliche Arbeitsmaschine (100) mit zumindest zwei Kraftstoffen (K1, K2) in der Kraftstoffzusammensetzung (200) befüllbar ist, wobei einer der zumindest zwei Kraftstoffe (K1, K2) insbesondere ein HVO-basierter Kraftstoff ist,
das Verfahren umfassend:
Bereitstellen (305) einer Feldkarte, wobei mittels der Feldkarte ein berechneter Kraftstoffverbrauch (Vb) der landwirtschaftlichen Arbeitsmaschine (100) basierend auf einem Referenzkraftstoff (KR) bestimmbar ist, wobei die Feldkarte ein Leistungsprofil zum Bestimmen des berechneten Kraftstoffverbrauchs (Vb) der landwirtschaftlichen Arbeitsmaschine (100) aufweist;
Bearbeiten (310) einer Feldfläche mittels der landwirtschaftlichen Arbeitsmaschine (100) und erfassen eines tatsächlichen Kraftstoffverbrauchs (Vt) der landwirtschaftlichen Arbeitsmaschine (100) für das Bearbeiten;
Bestimmen (315) des berechneten Kraftstoffverbrauchs (Vb) der landwirtschaftlichen Arbeitsmaschine (100) für das Bearbeiten; und
Ermitteln (320) der Kraftstoffzusammensetzung (200) basierend auf dem tatsächlichen Kraftstoffverbrauch (Vt) und dem berechneten Kraftstoffverbrauch (Vb).

2. Verfahren (300) nach Anspruch 2,
das Verfahren umfassend:
Einstellen (325) der landwirtschaftlichen Arbeitsmaschine (100) basierend auf der ermittelten Kraftstoffzusammensetzung (200), um den tatsächlichen, zukünftigen Kraftstoffverbrauch zu optimieren.

3. Verfahren (300) nach Anspruch 1 oder 2,
wobei die Kraftstoffzusammensetzung (200) ermittelt wird, indem eine Volumenbilanz des tatsächlichen Kraftstoffverbrauchs (Vt) und des berechneten Kraftstoffverbrauchs (Vb) gebildet wird.

4. Verfahren (300) nach einem der vorhergehenden Ansprüche,
wobei die Kraftstoffzusammensetzung (200) ermittelt wird, indem eine Leistungsbilanz basierend auf dem tatsächlichen Kraftstoffverbrauch (Vt) und dem berechneten Kraftstoffverbrauch (Vb) gebildet wird.

5. Verfahren (300) nach einem der vorhergehenden Ansprüche,
wobei das Leistungsprofil historische Betriebsdaten, insbesondere einen historischen Kraftstoffverbrauch, der landwirtschaftlichen Arbeitsmaschine (100) umfasst und/oder das Leistungsprofil einen Leistungspfad für den von der landwirtschaftlichen Arbeitsmaschine (100) zum Bearbeiten der Feldfläche zurückgelegten Weg umfasst.

6. Verfahren (300) nach einem der vorhergehenden Ansprüche,
das Verfahren umfassend:
Bestimmen der Anzahl der Kraftstoffe (K1, K2), mit denen die landwirtschaftliche Arbeitsmaschine (100) befüllt ist.

7. Verfahren (300) nach einem der vorhergehenden Ansprüche,
das Verfahren umfassend:
Bestimmen der Bilanz von emittierten, treibhausaktiven Stoffen basierend auf der Kraftstoffzusammensetzung, wobei einer der emittierten, treibhausaktiven Stoffe insbesondere CO2 ist, wobei optional eine Sollmenge einer der zumindest zwei Kraftstoffen basierend auf der bestimmten Bilanz ermittelt wird, wobei die Sollmenge zu einer Reduzierung der der emittierten, treibhausaktiven Stoffe führt.

8. Verfahren (300) nach einem der vorhergehenden Ansprüche,
wobei das Ermitteln der Kraftstoffzusammensetzung (200) auf die landwirtschaftliche Arbeitsmaschine (100) wirkende äußere Einflüsse berücksichtigt, insbesondere Temperatur, Luftfeuchtigkeit, Höhenlage, Bodenbeschaffenheit, Topografie, Pflanzenart und/oder Ernteguteigenschaften.

9. Verfahren (300) nach einem der vorhergehenden Ansprüche,
wobei das Verfahren beim Bearbeiten der Feldfläche mittels der landwirtschaftlichen Arbeitsmaschine (100) umfasst:
Ermitteln einer Startzeit und eines Startorts basierend auf der Feldkarte;
Erfassen einer Startmenge an Kraftstoff (K1, K2) mittels eines Kraftstoffsensors;
Ermitteln einer Endzeit und eines Endorts basierend auf der Feldkarte;
Erfassen einer Endmenge an Kraftstoff (K1, K2) mittels eines Kraftstoffsensors; und
Ermitteln eines Kraftstoffverbrauchs (Vt, V1, V2) basierend auf der Startmenge und Endmenge.

10. Verfahren zum Betreiben einer landwirtschaftlichen Arbeitsmaschine (100), wobei das Verfahren ein Verfahren (300) zum Ermitteln einer Kraftstoffzusammensetzung (200) für die landwirtschaftliche Arbeitsmaschine (100) nach einem der vorhergehenden Ansprüche umfasst.

11. System zur Datenverarbeitung (110) für eine landwirtschaftliche Arbeitsmaschine (100), umfassend einen Prozessor, der so angepasst und/oder konfiguriert ist, dass er das Verfahren nach einem der vorherigen Ansprüche ausführt.

12. Landwirtschaftliches Dokumentationssystem (105) mit einem System zur Datenverarbeitung (110) nach Anspruch 11.

13. Landwirtschaftliche Arbeitsmaschine (100) mit einem landwirtschaftlichen Dokumentationssystem (105) nach Anspruch 12.
